# EUROPÄISCHE PATENTSCHRIFT

(11) **EP 1 477 540 B1**
(45) Veröffentlichungstag und Bekanntmachung des Hinweises auf die Patenterteilung: **09.04.2008**
(21) Anmeldenummer: 04009629.9
(22) Anmeldetag: 23.04.2004
(51) Int. Cl.: C09J 7/02

(54) **Haftklebeband**
Adhesive tape
Ruban adhésif

(30) Priorität: 14.05.2003 DE 10321585
(43) Veröffentlichungstag der Anmeldung: 17.11.2004
(73) Patentinhaber: tesa AG, 20253 Hamburg (DE)
(72) Erfinder: Husemann, Marc , Dr., 22605 Hamburg (DE); Zöllner, Stephan, Dr., 21244 Buchholz/Nordheide (DE)

(56) Entgegenhaltungen:
- EP-A- 0 647 691
- US-A- 5 387 304

## Beschreibung

Die Erfindung betrifft ein Haftklebeband mit hoher Reißfestigkeit und hoher Reversibilität sowie ein Verfahren zu dessen Herstellung.

Durch immer größere Umweltauflagen und immer kürzere Verwertungszyklen werden auch an Haftklebebänder immer größere Anforderungen gestellt. So müssen z. B. Automobile oder Elektronikteile nach Verwendung in einigen Ländern wieder recycelt werden. Da häufig Haftklebebänder zur Verklebung der einzelnen Bauteile eingesetzt werden, möchte man, daß beim Entfernen der einzelnen Bauteile keine Rückstände der Haftklebemasse verbleiben und daß das Haftklebeband nicht spaltet, z. B. durch Umspulen der Haftklebemasse vom Träger auf das Bauteil.

Um diese Nachteile zu umgehen, lassen sich verschiedene Konzepte einsetzen. Eine Möglichkeit sind stripfähige Haftklebebänder, die unter Verstreckung ihre Klebkraft verlieren und sich somit rückstandsfrei entfernen lassen. Hier sei nur exemplarisch US 5,409,189 angegeben. Diese zumeist auf SIS-, SBS- oder SEBS-Basis hergestellten Haftklebebänder weisen aber - besonders für den Einsatz im industriellen Bereich - keine gute Alterungs- und Temperaturstabilität auf.

In die gleiche Richtung zielt US 6,120,867, wobei hier in dem mehrschichtigen Verbund auch normale Haftklebemassen eingesetzt werden können. Nachteilig ist auch hier, daß ein Anfasser oder ähnliches benötigt wird, um das Haftklebeband zu dehnen und somit den Stripeffekt zu erreichen.

Weiterhin lassen sich auch Primer oder geätzte Folien oder Corona behandelte Folien zur Verstärkung des Verbundes zwischen Träger und Haftklebemasse einsetzen.

In US 5,436,063 werden "abrasive Partikel" in einem Bindemittel eingeschlossen, wobei das Bindemittel mit z. B. actinischer Strahlung vorgehärtet wurde, um einen stabileren Verbund zu erzielen. Nach dieser Methode wurden aber keine Haftklebemassen an Trägermaterialien angebunden.

In US 6,129,964 wurde das Trägermaterial gezielt modifiziert, um eine Schwächung des Verbundes aus Träger und Haftklebemasse zu erreichen.

Die US 5,387,304 A offenbart ein dreischichtiges System, umfasend ein Trägermaterial, das von einer Seite mit einer Haftklebemasse und von der anderen Seite mit einem UV-härtenden Material beschichtet ist. Als Träger werden insbesondere Folienträger verwendet. Das System ist für eine hitzeaktivierte Aushärtung vorgesehen.

Die EP 647 691 A offenbart ein Klebeband, insbesondere zum Umwickeln flexibler Leitungssätze, aus einem flexiblen Träger und einer selbstklebende Eigenschaften aufweisende Beschichtung, wobei dem Träger und/oder der Beschichtung eine durch Erhitzen aushärtbare Marterialkomponente zugegeben ist. Das Klebeband weist nach dem Aushärten formstabile Eigenschaften auf.

Der Erfindung liegt somit die Aufgabe zugrunde, die Nachteile des Standes der Technik zu beseitigen. Insbesondere sollen ein Haftklebeband mit einer hohen Reißfestigkeit und einer hohen Reversibilität sowie ein Verfahren zu dessen Herstellung angegeben werden.

Diese Aufgabe wird durch die Merkmale der Ansprüche 1 und 9 gelöst. Zweckmäßige Ausgestaltungen der Erfindungen ergeben sich aus den Merkmalen der Ansprüche 2 bis 8 sowie 10 bis 14.

Nach Maßgabe der Erfindung ist ein Haftklebeband vorgesehen, das eine mittels Strahlung vernetzte Haftklebemasse und ein Trägermaterial, auf das die vernetzte Haftklebemasse aufgebracht ist, umfaßt, wobei das Trägermaterial durch Tränken mit einem UV-härtenden Material und anschließendes Härten des UV-härtenden Materials modifiziert ist.

Aufgrund dieser Modifizierung des Trägermaterials wird ein Haftklebeband mit einer hohen Reißfestigkeit und einer hohen Reversibilität erhalten. Das Haftklebeband besteht zweckmäßigerweise zumindest aus einem Vlies, Gewebe, oder Papierträger, der mit einem UV-härtenden Lack, mit einem UV-härtenden viskoelastischen Polymer oder mit einem UV-härtenden elastischen Polymer getränkt wurde, und einer mit actinischer Strahlung härtbaren Haftklebemasse, wobei der gesamte Verbund mit actinischer Strahlung vernetzt wurde. Die Verwendung des UV-härtenden Materials und dessen anschließende Härtung führen zu einer Stabilisierung des Trägermaterials.

Nachfolgend werden die einzelnen Komponenten des erfindungsgemäßen Haftklebebandes, d. h. das UV-härtende Material, das Trägermaterial und die Haftklebemasse näher beschrieben.

### UV-härtendes Material

Das UV-härtende Material, das nachfolgend auch als UV-Lack oder Lack bezeichnet wird, basiert in einer besonders bevorzugten Ausführungsform aus einem Polymer aus (Meth)acrylaten, Urethanacrylaten, Synthesekautschuken, Melaminharzen, modifizierten Synthesekautschuken oder Epoxyacrylaten. Zur Stabilisierung oder Aushärtung des Trägermaterials sollte der Lack nach der Aushärtung zumindest eine Glasübergangstemperatur von größer 10 °C besitzen, in einer sehr bevorzugten Ausführungsform von größer 25 °C. In einer Ausführungsform der Erfindung werden Oligomere oder polymere Verbindungen eingesetzt, die zumindest eine endständige Doppelbindung enthalten. Es können auch Mischungen eingesetzt werden.
Für den UV-Härtungsprozeß enthält die Mischung einen freien UV-Photoinitiator und/oder einen copolymerisierbaren UV-Photoinitiator und/oder einen bereits im Oligomer oder Polymer enthaltenden UV-Photoinitiator.

Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651 von Fa. Ciba Geigy^{®}), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthylsulfonylchlorid, und photoaktive Oxime, wie z. B. 1-Phenyl-1,2-propandion-2-(O-ethoxycarbonyl)oxim.

Die oben erwähnten und weitere einsetzbare Photoinitiatoren und andere vom Typ Norrish-I oder Norrish-II können folgende Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin- und/oder Fluorenon-, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinitiation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.
In einer weiter sehr bevorzugten Auslegung enthält der UV-Lack einen Vernetzer. Hier können bevorzugt di- oder multifunktionelle Vinylverbindungen eingesetzt werden, wobei besonders di- und multifunktionelle Acrylate und Methacrylate bevorzugt werden. Ein konkretes Beispiel ist z. B. Hexandioldiacrylat (HDDA). Weiterhin lassen sich aber auch di- oder multifunktionelle Epoxide zur Vernetzung einsetzen. Hier eignen sich besonders diepoxidierte Bisphenol A-Derivate.

In einer weiteren bevorzugten Auslegung der Erfindung wird ein sogenanntes Präpolymer als UV-härtender Lack eingesetzt. Unter einem Präpolymer wird eine Mischung aus Polymeren und Monomeren verstanden, die eine Sirup-artige Viskosität besitzen. In einer sehr bevorzugten Ausführung wird eine konventionelle Polymerisation gestartet, diese aber nur bis zu einem bestimmten Umsatz geführt. Durch den Umsatz der Polymerisation wird die Viskosität des UV-Lacks vorgegeben. In der Regel werden bei Umsätzen von ca. 10 bis 30 % gute Streichviskositäten erreicht. Die Polymerisation kann thermisch oder durch UV-Licht initiiert werden.

Findet eine Methode der radikalischen Polymerisation Anwendung, werden als Polymerisationsinitiatoren vorteilhaft übliche radikalbildende Verbindungen wie beispielsweise Peroxide, Azoverbindungen und Peroxosulfate eingesetzt. Auch Initiatorengemische eignen sich hervorragend.

Findet eine UV-initiierte Polymerisation statt, so werden unter UV-Licht Radikal-bildende Verbindungen eingesetzt. Solche UV-Photoinitiatoren können nach Norrish I oder Norrish II operieren. Ein repräsentativer Überblick wird wiederum von Fouassier: "Photoinitiation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden. Neben den obengenannten Photoinitiatoren lassen sich aber auch Photokationenerzeuger (PAG) hinzugeben, die unter UV-Licht-Kationen freisetzen. In diesem Fall der Erfindung wird dann der UV-Lack nicht über einen radikalischen Mechanismus, sondern über einen kationischen Mechanismus gehärtet.

Für die UV-Präpolymere werden in einer sehr bevorzugten Form Acrylate und Methacrylate als Monomere und Comonomere verwendet. Die Polymere besitzen nach der Polymeriation und Vernetzung bevorzugt eine Glasübergangstemperatur von oberhalb 25 °C und basieren auf folgenden Monomeren:
Acryl- oder Methacrylmomonere, die aus Acryl- und Methacrylsäureester mit Alkylgruppen, die 1 bis 20 C-Atomen, bevorzugt 1 bis 16 C-Atomen umfassen, bestehen. Spezifische Beispiele, ohne sich durch diese Aufzählung einschränken zu wollen, sind Methylacrylat, Methylmethacrylat, Ethylacrylat, Ethylmethacrylat, n-Butylacrylat, n-Butylmethacrylat, n-Pentylacrylat, n-Hexylacrylat, n-Hexylmethacrylat, n-Heptylacrylat, n-Octylacrylat, n-Octylmethacrylat, n-Nonylacrylat, Laurylacrylat, Stearylacrylat, Behenylacrylat und deren verzweigten Isomere, wie z. B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindest 6 C-Atomen. Die Cycloalkylalkohole können auch substituiert sein, z. B. durch C1-6-Alkyl, Halogen oder Cyano. Spezifische Beispiele sind Cyclohexylmethacrylate, Isobornylacrylat, Isobornylmethacrylate und 3,5-Dimethyladamantylacrylat.

In einer Ausführungsform werden Monomere eingesetzt, die polare Gruppe wie Carboxyl, Sulfon- und Phosphonsäure, Hydroxy-, Lactam und Lacton, N-substituiertes Amid, N-substituiertes Amin, Carbamat-, Epoxy-, Thiol-, Ether, Alkoxy-, Cyan- oder ähnliches tragen.

Moderate basische Monomere sind z. B. N,N-Dialkyl-substituierte Amide, wie z. B. N,N-Dimethylacrylamid, N,N-Dimethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acrytoytoxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Auslegung werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

In einer weiteren bevorzugten Auslegung werden zu den beschriebenen Comonomeren Monomere hinzugesetzt, die eine hohe statische Glasübergangstemperatur besitzen. Als Komponenten eigenen sich aromatische Vinylverbindungen, wie z. B. Styrol, wobei bevorzugt die aromatischen Kerne aus C₄ bis C₁₈ bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Weiterhin werden in einer weiteren sehr bevorzugten Auslegung Photoinitiatoren mit einer copolymerisierbaren Doppelbindung eingesetzt. Als Photoinitiatoren sind Norrish-I- und -II-Photoinitiatoren geeignet. Beispiele sind z. B. Benzoinacrylat und ein acryliertes Benzophenon der Fa. UCB (Ebecryl P 36^{®} und Ebecryl P 38^{®}). Diese Aufzählung besitzt keinen Anspruch auf Vollständigkeit.

### Trägermaterial

Als Trägermaterial für das Klebeband können alle bekannten textilen Träger wie Gewebe, Gewirke oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.
Die durch die Partikelschicht hindurchgenadelten Haltefasern halten die Deckschicht und die Unterlagsschicht in einem Abstand voneinander und sie sind mit der Deckschicht und der Unterlagsschicht verbunden.
Abstandsgewebe oder -gewirke sind u. a. in zwei Artikeln beschrieben, und zwar (1) in dem Artikel "Raschelgewirkte Abstandsgewirke" aus der Fachzeitschrift "kettenwirk-praxis 3/93", 1993, Seiten 59 bis 63, und (2) in dem Artikel "Raschelgewirkte Abstandsgewirke" aus der Fachzeitschrift "kettenwirk-praxis 1/94", 1994, Seiten 73 bis 76, auf deren Inhalt hiermit Bezug genommen wird und deren Inhalt Teil dieser Offenbarung und Erfindung wird.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozeßführung ausschließlich oder zumindest überwiegend auf Faserknotenpunkte beschränken, so daß unter Erhalt der lockeren, offenen Struktur im Vlies trotzdem ein stabiles, dreidimensionales Netzwerk gebildet wird.

Als besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.

Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Ober- als auch auf der Unterseite eine Verfestigung erfährt.

Schließlich sind auch Nähvliese als Vorprodukt geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Naßvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.
Ein derartiges Vlies ist dadurch gekennzeichnet, daß die Fasern naß gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.
Die Verfestigung des Vliesträgers läßt sich auch ohne Bindemittel beispielsweise durch Heißprägen mit strukturierten Walzen erreichen, wobei über Druck, Temperatur, Verweilzeit und die prägegeometrie Eigenschaften wie Festigkeit, Dicke, Dichte, Flexibilität u. ä. gesteuert werden können.

Für die Nutzung von Vliesen im Rahmen dieser Erfindung ist besonders die adhäsive Verfestigung von mechanisch vorverfestigten oder naßgelegten Vliesen von Interesse. Von Vorteil für das erfinderische Verfahren kann es sein, wenn dies zusätzlich über die Zugabe von Bindemittel in fester, flüssiger, geschäumter oder pastöser Form erfolgt. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u. ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Die Zugabe des Bindemittels erfolgt bevorzugt bereits bei der Vliesherstellung, bei der mechanischen Vorverfestigung oder aber in einem gesonderten Prozeßschritt, wobei dieser in-line oder off-line durchgeführt werden kann. Nach der Bindemittelzugabe muß temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, daß das Bindemittel nach Ende des Vlies-Herstellprozesses seine Klebrigkeit verloren hat. Vorteilhaft ist, daß durch thermische Behandlung flüchtige Komponenten wie Faserhilfsstoffe entfernt werden und somit ein Vlies mit günstigen Foggingwerten entsteht, so daß bei Einsatz einer foggingarmen Klebemasse ein Klebeband mit besonders günstigen Foggingwerten produziert werden kann.

Eine weitere Sonderform der adhäsiven Verfestigung besteht darin, daß die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Als Ausgangsmaterialien für den textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich, ohne erfinderisch tätig werden zu müssen, eine Vielzahl weiterer Fasern zur Herstellung des Vlieses eingesetzt werden.

Es eignet sich allerdings auch ein Trägermaterial, das aus Papier, aus einem Laminat, aus einer Folie (zum Beispiel PP, PE, PET, PA), aus Schaumstoff oder aus einer geschäumten Folie besteht.

Eine Schwerentflammbarkeit der Klebebänder läßt sich erzielen, indem dem (Vlies-)Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Maschenwaren sind textile Flächengebilde, hergestellt aus einem oder mehreren Fäden oder Fadensystemen durch Maschenbildung (Fadenschleifen), im Unterschied zu Webwaren (Geweben), bei denen die Fläche durch Verkreuzen von zwei Fadensystemen (Kett- und Schußfäden) hergestellt wird, und den Vliesen (Faserverbundstoffen), bei denen ein loser Faserflor durch Wärme, Nadelung, Nähen oder durch Wasserstrahlen verfestigt wird.

Maschenwaren lassen sich in Gestricke, bei denen die Fäden in Querrichtung durch das Textil laufen, und in Gewirke einteilen, bei denen die Fäden längs durch das Textil laufen. Maschenwaren sind durch ihre Maschenstruktur prinzipiell nachgiebige, anschmiegsame Textilien, weil sich die Maschen in Länge und Breite dehnen können und das Bestreben haben, in ihre Ausgangslage zurückzukehren. Sie sind bei hochwertigem Material sehr strapazierfähig.

Neben Vliesen und Trägern lassen sich für das erfindungsgemäße Haftklebeband aber auch auf Papier basierende Träger einsetzen. Als Papierträger lassen sich alle bekannten Papiermaterialien einsetzen. Neben graphischen Papieren lassen sich farbige Papiere, Tiefendruckpapiere, Offsetpapiere, Druckpapiere allgemeiner Art oder Transparentpapiere einsetzen, wobei diese Aufzählung keinen Anspruch auf Vollständigkeit besitzt. Weiterhin können sich auch die Papierträger durch das Flächengewicht unterscheiden, wobei bevorzugt Flächengewichte zwischen 30 und 250 g/m² eingesetzt werden. Des weiteren werden ein- oder zweiseitig gestrichene Papiere, ein-, zwei oder dreilagige Papiere, glänzend, matte oder ultradünne Papiere, holzhaltige Papiere oder Papier, die auf einem ökologischen Fasermix basieren, Recyclingpapiere, Papiere mit verschiedenen Füllstoffen oder Papiere auf Basis von Zellstoffen verwendet. Papierhersteller für die obengenannten Papiere sind z. B. die Firmen Steinbeis, Neusiedler, Zanders oder Meerssen & Palm. Weiterhin lassen sich auch Craft-Papiere einsetzen, wie sie z. B. Verwendung in den tesa Krepp-Klebebändern finden.

### Haftklebemasse

Als Haftklebemasse lassen sich in besonders vorteilhafter Weise mit actinischer Strahlung vernetzbare Haftklebesysteme, wie z. B. Acrylat-, Naturkautschuk-, Synthesekautschuk-, Silikon- oder EVA-Kleber einsetzen, insbesondere von Vorteil sind aus dieser Gruppe die Acrylathaftklebemassen. Natürlich lassen sich aber auch alle weiteren, dem Fachmann bekannten strahlenvernetzbaren Haftklebemassen verarbeiten, wie sie z. B. im "Handbook of Pressure Sensitive Adhesive Technology" von Donatas Satas (van Nostrand, New York 1989) aufgeführt sind.

Die vernetzbaren Haftklebesysteme werdem erfindungsgemäß für ein Haftklebeband verwendet, wobei das Klebeband ein- oder beidseitig mit einer selbstklebenden Schicht ausgerüstet sein kann.

In einer sehr bevorzugten Ausführungsform werden Acrylathaftklebemassen eingesetzt, die eine Glasübergangstemperatur von unterhalb 20 °C besitzen und auf folgenden Monomeren basieren:
Acryl- oder Methacrylmomonere, die Acryl- und Methacrylsäureester mit Alkylgruppen, die aus 4 bis 14 C-Atomen, bevorzugt 4 bis 9 C-Atomen bestehen, umfassen Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat; n-Octylmethacrylat, n-Nonylacrylat, Laurylacrylat, Stearylacrylat, Behenylacrylat und deren verzweigten Isomere, wie z. B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindest 6 C-Atomen. Die Cycloalkylalkoholen können auch substituiert sein, z. B. durch C1-6-Alkyl, Halogen oder Cyano. Spezifische Beispiele sind Cyclohexylmethacrylate, Isobornylacrylat, Isobornylmethacrylate und 3,5-Dimethyladamantylacrylat.

In einer Auslegung werden Monomere eingesetzt, die polare Gruppe wie Carboxyl, Sulfon- und Phosphonsäure, Hydroxy-, Lactam und Lacton, N-substituiertes Amid, N-substituiertes Amin, Carbamat-, Epoxy-, Thiol-, Ether, Alkoxy-. Cyan- oder ähnliches tragen.

Moderate basische Monomere sind z. B. N,N-Dialkyl-substituierte Amide, wie z. B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Gycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Ausführungsform werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

In einer weiteren bevorzugten Ausführungsform werden zu den beschriebenen Comonomeren Monomere hinzugesetzt, die eine hohe statische Glasübergangstemperatur besitzen. Als Komponenten eigenen sich aromatische Vinylverbindungen, wie z. B. Styrol, wobei bevorzugt die aromatischen Kerne aus C₄ bis C₁₈ bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Weiterhin werden in einer weiteren sehr bevorzugten Ausführungsform Photoinitiatoren mit einer copolymerisierbaren Doppelbindung eingesetzt. Als Photoinitiatoren sind Norrish-I und -II-Photoinitiatoren geeignet. Beispiele sind z. B. Benzoinacrylat und ein acryliertes Benzophenon der Fa. UCB (Ebecryl P 36^{®}). Diese Aufzählung ist nicht vollständig. Im Prinzip können alle dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren, die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend kann auf Carroy et al. in "Chemistry and Technology of UV and EB Formulation for Coatings, Inks and Paints", Oldring (Hrsg.), 1994, SITA, London, verwiesen werden.

Für Naturkautschukklebemassen wird der Naturkautschuk bis zu einem Molekulargewicht (Gewichtsmittel) nicht unter etwa 100.000 Dalton, bevorzugt nicht unter 500.000 Dalton gemahlen und additiviert. Auch Elektronenstrahl-vernetzbare Synthesekautschükklebemassen sind einsetzbar.

Zur UV-Vernetzung werden den Haftklebemassen, welche in dem erfindungsgemäßen Haftklebeband zum Einsatz kommen, optional UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651 von Fa. Ciba Geigy^{®}), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthylsulfonylchlorid, und photoaktive Oxime, wie z. B. 1-Phenyl-1,2-propandion-2-(O-ethoxycarbonyl)oxim.

Die oben erwähnten und weitere einsetzbare Photoinitiatoren und andere vom Typ Norrish-I oder Norrish-II können folgende Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Äzobenzoin-, Thioxanthon-, Hexarylbisimidazol-, Triazin- und/oder Fluorenon-, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinitiation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Zur Herstellung von Haftklebebändern werden diesen Elastomeren optional Vernetzer beigemischt: Geeignete Vernetzersubstanzen in diesem Sinne sind insbesondere bi- oder multifunktionelle (Meth)acrylate oder di- oder multifunktionelle endständige Vinylverbindungen.

Weiterhin werden zur Herstellung von Haftklebemassen diese Elastomere optional mit zumindest einem Harz abgemischt.

Als zuzusetzende klebrig machende Harze sind ausnahmslos alle vorbekannten und in der Literatur beschriebenen Klebharze einsetzbar, wenn sie zumindest eine teilweise Verträglichkeit mit dem Elastomer aufweisen. Genannt seien stellvertretend die Pinen-, Inden- und Kolophoniumharze, deren disproportionierte, hydrierte, polymerisierte, veresterte Derivate und Salze, die aliphatischen und aromatischen Kohienwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Die Haftklebemassen können des weiteren mit einem oder mehreren Additiven wie Alterungsschutzmitteln, Lichtschutzmitteln, Ozonschutzmitteln, Fettsäuren, Harzen, Weichmachern, Treibmitteln, Keimbildnern und Beschleunigern abgemischt sein.

Weiterhin können sie mit einem oder mehreren Füllstoffen wie Fasern, Ruß, Zinkoxid, Titandioxid, Mikrovollkugeln, Kieselsäure, Silikaten und Kreide gefüllt sein, wobei auch der Zusatz von blockierungsfreien Isocyanaten möglich ist.

Bei Kautschuk/Synthesekautschuk als Ausgangsmaterial für die Haftklebemasse sind weite Variationsmöglichkeiten gegeben, sei er aus der Gruppe der Naturkautschuke oder der Synthesekautschuke oder sei er aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

Als ebenfalls zuzusetzende Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Nachfolgend wird der Aufbau der erfindungsgemäßen Haftklebebänder näher beschrieben, ohne daß die Erfindung auf diese Ausführungsformen beschränkt werden soll. Die erfindungsgemäßen Haftklebebänder können insbesondere wie folgt aufgebaut sein:
(a) einschichtige Haftklebebänder, die aus einer Haftklebeschicht und einem bereits definiertem Trägermaterial bestehen;
(b) mehrschichtige Haftklebebänder, welche als Haftklebeschicht ein- oder beidseitig auf zumindest einem bereits definierten Träger beschichtet sind.

### (a) Einschichtige Haftklebebänder

Einschichtige Aufbauten bestehen nur aus einer Haftklebemassenschicht, die auf ein Trägermaterial aufgetragen ist. Für die Verwendung als Haftklebeband kann es von Vorteil sein, wenn die Haftklebemasse noch mit einem Trennpapier eingedeckt wird, so daß sich das Haftklebeband leichter abrollen läßt. In einer bevorzugten Ausführungsform werden mit Polydimethylsiloxan beschichtete Trennpapiere eingesetzt (Glassine, HDPE, LDPE).

In einer weniger bevorzugten Auslegung könnte das Trägermaterial noch einmal rückseitig mit einem Trennlack beschichtet sein, um so ein leichtes Abrollen des Haftklebebandes zu gewährleisten.

### (b) Mehrschichtige Haftklebebänder

Des weiteren können, basierend auf dem Trägermaterial, dem UV-Lack und der Haftklebemasse, auch mehrschichtige Haftklebebänder hergestellt werden, z. B. zweischichtige, dreischichtige oder auch Multischichtsysteme.

In der einfachsten Ausführung wird mit der erfindungsgemäßen Haftklebemasse ein doppelseitiges Haftklebeband aufgebaut, wobei das bereits spezifizierte Trägermaterial doppelseitig mit der gleichen oder unterschiedlichen Haftklebemassen beschichtet wird, wobei sich die Haftklebemassen auch in bezug auf ihren Masseauftrag unterscheiden können.
Falls die Haftklebemassen stark vernetzt oder wenig haftklebrig sind, kann es sein, daß diese doppelseitigen Haftklebebänder kein Trennpapier zum Abrollen benötigen.

In einer weiteren Ausführungsform kann es von großem Vorteil sein, wenn zumindest ein Trennpapier zum Abdecken eingesetzt wird. In einer bevorzugten Ausführungsform werden mit Polydimethylsiloxan beschichtete Trennpapiere eingesetzt (Glassine, HDPE, LDPE). Für den Fall, daß nur ein Trennpapier eingesetzt wird, besitzt das Trennpapier in einer bevorzugten Auslegung eine Abstufung in der Silikonisierung und somit auf beiden Seiten unterschiedliche Trennkräfte.

Für mehrschichtigere Systeme kann es angebracht sein, ein weiteres Trägermaterial in den Verbund oder eine dritte Haftklebemasse einzubringen. Als weiteres Trägermaterial eignen sich z. B. die unterschiedlichsten Folien, wie z. B. Polyester, PET, PE, PP, BOPP, Polyamid, Polyimid, Polyurethane oder PVC. Es lassen sich aber auch Vliese, Schäume, Gewebe oder Gewebefolien als weitere Trägermaterialien einsetzen.

Nach Maßgabe der Erfindung ist weiterhin ein Verfahren zur Herstellung eines Haftklebebandes vorgesehen, das folgende Schritte umfaßt:
(a) Tränken eines Trägermaterials mit einem UV-härtenden Material;
(b) Beschichten des mit einem UV-härtenden Material getränkten Trägermaterials mit einer mittels Strahlung vernetzenden Haftklebemasse;
(c) Härten des UV-härtenden Materials vor oder nach dem Beschichten des Trägermaterials mit der mittels Strahlung vernetzenden Haftklebemasse; und
(d) Vernetzen der Haftklebemasse.

Zweckmäßigerweise wird dazu das Trägermaterial durch ein Tauchbad geführt und dabei mit dem UV-härtenden Material getränkt. Die aufgetragene Menge des UV-härtenden Materials hängt zum einen von der Zusammensetzung des Trägermaterials ab und zum anderen von der Kontaktzeit. Für die Oberflächenbeschichtung des Trägermaterials sind nur sehr kurze Kontaktzeiten (< 1 Sek.) erforderlich. Für die vollständige Durchtränkung des Trägermaterials werden längere Kontaktzeiten bevorzugt (1-5 Sek.). Weiterhin kann durch Reduzierung der Fließviskosität des UV-härtenden Materials ebenfalls die Kontaktzeit minimiert werden. Auf das modifizierte Trägermaterial wird die Haftklebemasse beschichtet und diese dann mit actinischer Strahlung vernetzt. Die Verwendung des UV-härtenden Materials und dessen anschließende Härtung führen zu einer Stabilisierung des Trägermaterials. Das UV-härtende Material wird daher im folgenden auch als Träger-stabilisierendes Material bezeichnet.

In einer Ausführungsform der Erfindung wird das UV-härtende und Träger-stabilisierende Material aus Lösung oder als Sirup direkt mit einem Streichrakel aufgetragen. In einer weiteren Auslegung wird das UV-härtende und Träger-stabilisierende Material im Sprühverfahren aufgebracht. In einer weiteren sehr bevorzugten Auslegung wird das UV-härtende und Träger-stabilisierende Material als niederviskoser Hot-melt auf das Trägermaterial aufgebracht.

Um den Durchtränkungsprozeß des Trägers zu beschleunigen, kann es von Vorteil sein, das UV-härtende Material mit einer Andruckwalze in den Träger zu drücken. Dies geschieht, wenn das UV-härtende und Träger-stabilisierende Material haftklebrige oder klebrige Eigenschaften hat, bevorzugt mit einer silikonisierten Walze.

Falls das UV-härtende und Träger-stabilisierende Material noch Lösungsmittel, z. B. organische Lösungsmittel oder Wasser enthält, kann es von Vorteil sein, den Träger vor der Beschichtung mit der Haftklebemasse mit Wärme zu versehen, um das Lösungsmittel zu entfernen. Dies geschieht besonders bevorzugt mittels Durchfahren durch einen Wärme-/Trockenkanal, mittels einer beheizbaren Hänge oder mittels Wärme-erzeugender Bestrahlung.

In einer weiteren bevorzugten Ausführungsform wird das UV-härtende und Träger-stabilisierende Material mit UV-Licht vorgehärtet. Zur Bestrahlung wird - in Abhängigkeit vom eingesetzten UV-Phototinitiator im UV-härtenden und Träger-stabilisierenden Material - ein bevorzugtes Wellenlängenspektrum gewählt. Generell wird mit UV-A-, UV-B- oder UV-C-Bestrahlung gehärtet, wobei sich in der Regel die UV-Strahlung aus einem Spektrum dieser drei Bereiche zusammensetzt. Es kann aber auch für das erfindungsgemäße Verfahren von Vorteil sein, wenn ein bestimmter Wellenlängenbereich z. B. durch Filter ausgeblendet wird. Zur Bestrahlung werden bevorzugt Quecksilbermitteldruckstrahler eingesetzt mit einer Strahlungsintensität von bis zu 240 W/cm². Entsprechende Strahler sind z. B. durch die Firmen Eltosch, Fusion oder Arcure kommerziell zugänglich. Die UV-Strahler können bahnförmig in einem Kanal oder rund um eine Walze angeordnet sein. Um die bei der UV-Bestrahlung entstehenden Wärme effizient abzuführen, ist es besonders von Vorteil, wenn der Träger während der UV-Bestrahlung über eine Kühlwalze geführt wird. In weiteren bevorzugten Ausführungsformen wird der Träger nach und/oder vor der UV-Bestrahlung ebenfalls über eine Kühlwalze geführt.

Ein weiterer Bestandteil des erfindungsgemäßen Verfahrens ist, daß anschließend auf das modifizierte Trägermaterial die Haftklebemasse aufgebracht wird. Dies geschieht in einer bevorzugten Ausführungsform aus der Schmelze als 100-%-System. Die Haftklebemasse kann hier aus der Schmelzdüse (z. B. GID-Düse) oder durch die Extrusionsdüse aufgebracht werden. Je nach Viskosität der Haftklebemasse werden bestimmte Verfahren bevorzugt. Für höherviskose Haftklebemassen (z. B. Kautschukbasierende Haftklebemassen) bieten sich Walzenauftragswerke oder Kalander an. Niederviskose Haftklebemassen (z. B. Acrylathaftklebemassen) werden bevorzugt durch eine Düse beschichtet. Zum Andrücken des Haftklebefilms kann es erforderlich sein, eine der folgende Verfahrensweisen zu verwenden: (1) der Haftklebefilm wird noch einmal mit einer Walze angedrückt; (2) während des Beschichtungsvorganges wird der Haftklebefilm mit einem Luftmesser auf den Träger gedrückt; (39 durch eine Vakuumbox werden Lufteinschlüsse zwischen Träger und Haftklebemasse vermieden; oder (4) durch elektrostatische Aufladung des Haftklebefilms wird die Haftklebemasse auf den Träger gedrückt.

In einer weiteren Ausführungsform der Erfindung kann die Haftklebemasse auch aus Lösung oder als Dispersion beschichtet werden. In diesem Fall ist es erforderlich, daß nach dem Beschichtungsvorgang das organische Lösemittel oder das Wasser entfernt wird. Dies geschieht besonders bevorzugt mittels Durchfahren durch einen Wärme-/Trockenkanal, mittels einer beheizbaren Hänge oder mittels Wärme-erzeugender Bestrahlung.

Ein weiterer Bestandteil des erfindungsgemäßen Verfahrens ist die anschließende Bestrahlung mit actinischer Strahlung. In einer sehr bevorzugten Auslegung wird mit UV-Licht bestrahlt. Weiter Möglichkeiten der Bestrahlung umfassen γ-Strahlung, Röntgenstrahlung und Bestrahlung mit Elektronenstrahlen (ESH). Es können prinzipiell alle Bestrahlungsmethoden angewendet werden, die in der Lage sind, innerhalb der Haftklebemasse eine Vernetzung herbeizuführen. Die Vernetzung verläuft besonders bevorzugt über einen radikalischen oder einen Kationenmechanismus.

Zur Bestrahlung mit Elektronen kommen typische Bestrahlungsvorrichtungen zum Einsatz, wie z. B. Linearkathodensysteme, Scannersysteme bzw. Segmentkathodensysteme, sofern es sich um Elektronenstrahlbeschleuniger handelt, Eine ausführliche Beschreibung des Standes der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere wischen 20 und 100 kGy.

In einer sehr vorteilhaften Ausführungsform des erfindungsgemäßen Verfahrens werden die Haftklebebänder mit ultravioletter Strahlung in einem Wellenlängenbereich von 200 bis 400 nm bestrahlt. Die Vernetzung der erfindungsgemäßen Schmelzhaftklebemassen erfolgt in günstiger Weise durch kurzzeitige UV-Bestrahlung mit handelsüblichen Quecksilber-Hochdruck oder -Mitteldrucklampen mit einer Leistung von z. B. 80 bis 240 W/cm. Es kann angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.

Weiterhin ist Bestandteil des erfindungsgemäßen Verfahrens, daß die Strahlungsleistung der UV- oder Elektronenbestrahlung dermaßen gewählt wird, daß das Trägermaterial und die Haftklebemasse durchstrahlt werden. Die vernetzende und härtende Bestrahlung bewirkt somit in einem Schritt eine Stabilisierung des Trägers, eine Vernetzung der Haftklebemasse und eine Stabilisierung des Verbundes aus Träger und Haftklebemasse.

Im folgenden wird die Erfindung anhand von Beispielen näher erläutert, ohne daß die Erfindung auf diese Beispiele beschränkt werden soll.

### Beispiele

### Prüfmethoden:

Es wurden folgende Prüfmethoden verwendet:

### A. Klebkraft

Die Prüfung der Schälfestigkeit (Klebkraft) erfolgte gemäß PSTC-1. Auf dem spezifischen Träger wird eine 50 µm dicke Haftklebeschicht aufgebracht. Ein 2 cm breiter Streifen dieses Musters wird auf eine Stahlplatte durch dreimaliges doppeltes Überrollen mittels einer 2-kg-Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

### B. Reversibilität

Zur Prüfung der Reversibilität wird analog Prüfmethode A vorgegangen. Nach Fixierung des 2 cm breiten Haftklebestreifens auf einer Polycarbonatplatte wird diese Platte eingespannt und der Haftklebestreifen im 135°-Winkel mit einer Geschwindigkeit von 10 m/min bei 60 °C und 50 % Luftfeuchtigkeit abgezogen. Der Test ist bestanden, wenn keine Masserückstände auf der Polycarbonatplatte verbleiben und der Haftklebebandverbund aus Träger und Haftklebemasse erhalten bleibt und nicht spaltet.

### Prüfmusterherstellung

Die Prüfmuster wurden wie folgt hergestellt:

### 1. Herstellung der UV-Lacke

### Lack 1

Eine Mischung aus 5 g Acrylsäure, 20 g n-Butylmethacrylat, 50 g Butylacrylat, 15 g Methylmethacrylat und 10 g Novares TK 90^{™} (Fa. VFT Rüttgers) wurde entgast, mit Stickstoff abgesättigt und unter Sauerstoffauschluß in einen Polyethylenbeutel gefüllt und eingeschweißt. Der PE-Beutel besitzt eine silikonisierte Innenschicht und ist von außen mit Aluminium beschichtet. Dann wurde der Reaktor mit einer Co60-Quelle mit 100 Krad/h und einer Gesamtdosis von 15 Krad bestrahlt. Der Sirup wurde mit 0,5 Gew.-% Esacure KIP 150^{™} (Fa. Lamberti) abgemischt und dann als UV-Sirup weiterverwendet.

### Lack 2

Ein für radikalische Polymerisationen konventioneller 2-L-Glasreaktor wurde mit einer UV-Lampe von Dr. Hönle sowie einem Propellerrührer versehen und mit 28 g Acrylsäure, 100 g Butylmethacrylat, 232 g 2-Ethylhexylacrylat, 40 g Methylmethacrylat, 0,5 g Irgacure 651^{®} (Fa. Ciba Spezialitätenchemie) und 200 g Aceton/Isopropanol (97 : 3) befüllt. Nach 45 Minuten Durchleiten von Stickstoffgas unter Rühren wurde die Monomermischung im Reaktor intervallweise mit UV-Licht im 2 Minuten Rhythmus bestrahlt. Durch Ansteigen der Innentemperatur auf 45 °C und das Ansteigen der Viskosität äußerte sich die fortschreitende Polymerisation. Bei einem Umsatz von ca. 20 % (nach Kontrolle über NIR, bezogen auf den Umsatz der Doppelbindungen) wurde die Reaktion durch Durchleiten mit Sauerstoff gestoppt. Das Präpolymer wurde anschließend als UV-Sirup weiterverwendet.

### Lack 3

Ebecryl 245^{®} der Fa. UCB Chemicals wurde mit 0,5 % Irgacure 651^{®} der Fa. Ciba Spezialitätenchemie und 10 % N-Butylacrylat abgemischt. Die Mischung wurde dann als UV-Lack weiterverwendet.

### 2. Herstellung der Haftklebemassen:

### Beispiel 1

Ein für radikalische Polymerisationen konventioneller 10-L-Reaktor wurde mit 60 g Acrylsäure, 1800 kg 2-Ethylhexylacrylat, 20 g Maleinsäureanhydrid, 120 g N-Isöpropylacrylamid und 666 g Aceton/Isopropanol (98/2) befüllt. Nach 45 Minuten Durchleiten mit Stickstoffgas unter Rühren wurde der Reaktor auf 58 °C hochgeheizt und 0,6 g 2,2-Azoisobuttersäurenitril (AIBN), gelöst in 20 g Aceton, hinzugegeben. Anschließend wurde das äußere Heizbad auf 70 °C erwärmt und die Reaktion konstant bei dieser Außentemperatur durchgeführt. Nach 45 min Reaktionszeit wurden 0,2 g Vazo 52^{®} der Fa. DuPont, gelöst in 10 g Aceton, hinzugegeben. Nach 70 min Reaktionszeit wurden wiederum 0,2 g Vazo 52^{®} der Fa. DuPont, gelöst in 10 g Aceton, hinzugegeben, nach 85 min Reaktionszeit 0,4 g Vazo 52^{®} der Fa. DuPont, gelöst in 400 g Aceton/Isopropanol (98/2). Nach 1:45 h wurden 400 g Aceton/Isopropanol (98/2) hinzugegeben. Nach 2 h wurden 1,2 g 2,2'-Azoisobuttersäurenitril (AIBN), gelöst in 20 g Aceton, hinzugegeben. Nach 5, 6 und 7 h wurden jeweils 2 g Dicyclohexyldioxypercarbonat (Perkadox 16^{®} der Fa. Akzo Nobel), gelöst in jeweils 20 g Aceton, hinzugegeben. Nach 7 h Reaktionszeit wurde mit 600 g Aceton/Isopropanol (98/2) verdünnt. Die Reaktion wurde nach 24 h Reaktionszeit durch Abkühlen auf Raumtemperatur abgebrochen. Nach Abkühlen wurden 10 g Isopropylthioxanthon (Speedcure ITX^{®} der Fa. Rahn) hinzugeben und vollständig gelöst. Anschließend wurde das Polymer vom Lösemittel durch Erhitzen auf 60 °C und Anlegen eines Vakuums (10 Torr) befreit.

### Beispiel 2

Ein für radikalische Polymerisationen konventioneller 10-L-Reaktor wurde mit 60 g Acrylsäure, 1800 kg 2-Ethylhexylacrylat, 20 g Maleinsäureanhydrid, 120 g N-Isopropylacrylamid und 666 g Aceton/Isopropanol (97/3) befüllt. Nach 45 Minuten Durchleiten mit Stickstoffgas unter Rühren wurde der Reaktor auf 58 °C hochgeheizt und 0,6 g 2,2'-Azoisobuttersäurenitril (AIBN), gelöst in 20 g Aceton, hinzugegeben. Anschließend wurde das äußere Heizbad auf 70 °C erwärmt und die Reaktion konstant bei dieser Außentemperatur durchgeführt. Nach 45 min Reaktionszeit wurden 0,2 g Vazo 52^{®} der Fa. DuPont, gelöst in 10 g Aceton, hinzugegeben. Nach 70 min Reaktionszeit wurden wiederum 0,2 g Vazo 52^{®} der Fa. DuPont, gelöst in 10 g Aceton, hinzugegeben, nach 85 min Reaktionszeit 0,4 g Vazo 52^{®} der Fa. DuPont, gelöst in 400 g, Aceton/Isopropanol (97/3). Nach 1:45 h wurden 400 g Aceton/Isopropanol (97/3) hinzugegeben. Nach 2 h wurden 1,2 g 2,2'-Azoisobuttersäurenitril (AIBN), gelöst in 20 g, Aceton hinzugegeben. Nach 5, 6 und 7 h wurden jeweils 2 g Dicyclohexyldioxypercarbonat (Perkadox 16^{®} der Fa. Akzo Nobel), gelöst in jeweils 20 g Aceton, hinzugegeben. Nach 6 h Reaktionszeit wurde mit 600 g Aceton/Isopropanol (97/3) verdünnt. Die Reaktion wurde nach 24 h Reaktionszeit durch Abkühlen auf Raumtemperatur abgebrochen. Nach Abkühlen wurden 10 g Irgacure 651^{®} der Fa. Ciba Spezialitätenchemie hinzugeben und vollständig gelöst. Anschließend wurde das Polymer vom Lösemittel durch Erhitzen auf 60 °C und Anlegen eines Vakuums (10 Torr) befreit.

### 3. Vlies

Es wurde auf ein 50 µm dickes Maliwatt-Vlies als Trägermaterial beidseitig beschichtet.

### 4. Herstellung von Haftklebebändern

Das Vlies wurde durch ein Tauchbad mit dem entsprechenden Lack geführt. Anschließend wurde mit einem Quecksilber-Mitteldruckstrahler der Fa. Eltosch (120 W/cm) einmal bei 10 m/min bestrahlt. Anschließend wurde die Haftklebemasse aus der Schmelze (bei ca. 150 °C) direkt nach dem Extrusionsbeschichtungsverfahren durch ein 300-µm-Düse (Spaltbreite) auf den getränkten Träger aufgelegt. Der Masseauftrag betrug 50 g/m². Durch elektrostatische Aufladung wurde der Haftklebemassenfilm auf den Vliesträger gedrückt. Anschließend wurde mit einem Quecksilber-Mitteldruckstrahler der Fa. Eltosch (120 W/cm) mehrmals bestrahlt oder mit einer Elektronenstrahlhärtungsanlage gehärtet.

### Hergestellte Haftklebebänder

### Produkt 1:

Haftklebeband aus Beispiel 1 und Lack 1. Es wurde 8 x mit UV-Licht bei einer Bahngeschwindigkeit von 20 m/min bestrahlt.

### Produkt 2:

Haftklebeband aus Beispiel 1 und Lack 2. Es wurde 8 x mit UV-Licht bei einer Bahngeschwindigkeit von 20 m/min bestrahlt.

### Produkt 3:

Haftklebeband aus Beispiel 1 und Lack 3. Es wurde 8 x mit UV-Licht bei einer Bahngeschwindigkeit von 20 m/min bestrahlt.

### Produkt 4:

Haftklebeband aus Beispiel 2 und Lack 1. Es wurde mit 230 kV Beschleunigungsspannung und einer Dosis von 40 KV gehärtet.

### Eigenschaften der Produkte 1 bis 4

Nach der Prüfmusterherstellung wurde zunächst von allen Produkten 1 bis 4 die Klebkraft auf Stahl gemäß Test A gemessen. Alle Werte wurden bei Raumtemperatur bestimmt und sind in Tabelle 1 aufgelistet.

**Tabelle 1**

| Produkt | KK Stahl (Test A) |
|---|---|
| 1 | 4,8 |
| 2 | 5,3 |
| 3 | 4,9 |
| 4 | 5,4 |

| | |
|---|---|
| KK: Sofortklebkraft in N/cm | |

Zur Bestimmung der Reversibilität wurde Test B auf Polycarbonat-Platten bei 60 °C durchgeführt, da bei Raumtemperatur viele Haftklebebänder diesen Test bestehen können. Tabelle 2 kann entnommen werden, daß der Test von allen nach dem erfindungsgemäßen Verfahren hergestellten Produkten bestanden wird. Als Referenz wurden einige kommerziell erhältliche tesa-Haftklebebänder gemessen, die diesen Test nicht bestehen.

**Tabelle 2**

| Produkte | Reversibilität (Test B) |
|---|---|
| 1 | bestanden |
| 2 | bestanden |
| 3 | bestanden |
| 4 | bestanden |
| tesa 4965 | nicht bestanden |
| tesa 4968 | nicht bestanden |
| tesa 4928 | nicht bestanden |

## Patentansprüche

1. Haftklebeband, umfassend eine mittels Strahlung vernetzte Haftklebemasse und ein Trägermaterial, auf das die vernetzte Haftklebemasse aufgebracht ist, wobei das Trägermaterial aus der Gruppe ausgewählt ist, die Gewebe, Gewirke und Vliese umfasst und durch Tränken mit einem Material und anschließendes Härten des Materials modifiziert ist,
**dadurch gekennzeichnet, dass**
das Material ein UV-härtendes Material
- auf Basis eines Polymers aus (Meth)Acrylaten, Urethanacrylaten, Synthesekautschuken, Melaminharzen, modifizierten Synthesekautschuken oder Epoxyacrylaten,
- Mischungen hiervon
- oder in Form eines Präpolymers
ist.

2. Haftklebeband nach Anspruch 1, **dadurch gekennzeichnet, daß** die mittels Strahlung vernetzte Haftklebemasse eine mittels actinischer Strahlung vernetzte Haftklebemasse ist.

3. Haftklebeband nach Anspruch 1 oder Anspruch 2, **dadurch gekennzeichnet, daß** die vernetzte Haftklebemasse eine Acrylathaftklebemasse mit einer Glasübergangstemperatur von weniger als 20 °C ist.

4. Haftklebeband nach Anspruch 3, **dadurch gekennzeichnet, daß** die Acrylathaftklebemasse auf einer Copolymerzusammensetzung basiert, die Acryl- oder Methacrylsäureester mit Alkylgruppen umfaßt, die 4 bis 14 Kohlenstoffatome aufweisen.

5. Haftklebeband nach einem der vorstehenden Ansprüche, **dadurch gekennzeichnet, daß** das UV-härtende Material ein UV-härtender Lack, ein UV-härtendes viskoelastisches Polymer oder ein UV-härtendes elastisches Polymer ist.

6. Haftklebeband nach einem der Ansprüche 1 bis 4, **dadurch gekennzeichnet, daß** das UV-härtende Material ein UV-härtender Lack mit einer Glasübergangstemperatur nach dem Härten von größer 10 °C ist.

7. Haftklebeband nach einem der vorstehenden Ansprüche, **dadurch gekennzeichnet, daß** das Trägermaterial ein- oder beidseitig mit einer vernetzten Haftklebemasse beschichtet ist.

8. Verfahren zur Herstellung eines Haftklebebandes, umfassend die Schritte
(a) Tränken eines Trägermaterials, das aus der Gruppe ausgewählt ist, die Gewebe, Gewirke und Vliese umfasst, mit einem UV-härtenden Material;
(b) Beschichten des mit einem UV-härtenden Material getränkten Trägermaterials mit einer mittels Strahlung vernetzenden Haftklebemasse;
(c) Härten des UV-härtenden Materials vor oder nach dem Beschichten des Trägermaterials mit der mittels Strahlung vernetzenden Haftklebemasse; und
(d) Vernetzen der Haftklebemasse.

9. Verfahren nach Anspruch 8, **dadurch gekennzeichnet, daß** eine mittels actinischer Strahlung vernetzende Haftklebemasse als Haftklebemasse verwendet wird.

10. Verfahren nach Anspruch 9, **dadurch gekennzeichnet, daß** das Härten des UV-härtenden Materials und das Vernetzen der mittels Strahlung vernetzenden Haftklebemasse mittels actinischer Strahlung nach dem Beschichten des Trägermaterials mit der Haftklebemasse erfolgen.

11. Verfahren nach Anspruch 10, **dadurch gekennzeichnet, daß** das UV-härtende Material vor Schritt (b) mittels UV-Strahlung vorgehärtet wird.

12. Verfahren nach einem der Ansprüche 10 und 11, **dadurch gekennzeichnet, daß** die Strahlungsleistung der actinischen Strahlung so gewählt wird, daß das mit dem UVvernetzenden Material getränkte Trägermaterial und die Haftklebemasse durchstrahlt werden.

13. Verfahren nach einem der Ansprüche 8 bis 12, **dadurch gekennzeichnet, daß** als UV-härtendes Material ein UV-gehärteter Lack, ein UV-gehärtetes viskoelastisches Polymer oder ein UV-gehärtetes elastisches Polymer verwendet werden.

## Claims

1. Pressure-sensitive adhesive tape comprising a radiation-crosslinked pressure-sensitive adhesive (PSA) and a carrier material to which the crosslinked PSA has been applied, the carrier material being selected from the group encompassing wovens, knits and nonwoven webs and having been modified by impregnation with a material and subsequent curing of the material, **characterized in that** the material is a UV-curing material
- based on a polymer of (meth)acrylates, urethane acrylates, synthetic rubbers, melamine resins, modified synthetic rubbers or epoxy acrylates,
- mixtures thereof
- or in the form of a prepolymer.

2. Pressure-sensitive adhesive tape according to Claim 1, **characterized in that** the radiation-crosslinked PSA is a PSA crosslinked by means of actinic radiation.

3. Pressure-sensitive adhesive tape according to Claim 1 or Claim 2, **characterized in that** the crosslinked PSA is an acrylate PSA having a glass transition temperature of less than 20°C.

4. Pressure-sensitive adhesive tape according to Claim 3, **characterized in that** the acrylate PSA is based on a copolymer composition which comprises acrylic or methacrylic esters with alkyl groups which have 4 to 14 carbon atoms.

5. Pressure-sensitive adhesive tape according to any one of the preceding claims, **characterized in that** the UV-curing material is a UV-curing coating material, a UV-curing viscoelastic polymer or a UV-curing elastic polymer.

6. Pressure-sensitive adhesive tape according to any one of Claims 1 to 4, **characterized in that** the UV-curing material is a UV-curing coating material having a glass transition temperature after curing of greater than 10°C.

7. Pressure-sensitive adhesive tape according to any one of the preceding claims, **characterized in that** the carrier material has been coated on one or both sides with a crosslinked PSA.

8. Process for producing a pressure-sensitive adhesive tape, comprising the steps of
(a) impregnating a carrier material selected from the group encompassing wovens, knits and nonwovens with a UV-curing material;
(b) coating the carrier material impregnated with a UV-curing material with a radiation-crosslinking PSA;
(c) curing the UV-curing material before or after the coating of the carrier material with the radiation-crosslinking PSA; and
(d) crosslinking the PSA.

9. Process according to Claim 8, **characterized in that** a PSA which crosslinks by means of actinic radiation is used as PSA.

10. Process according to Claim 9, **characterized in that** the curing of the UV-curing material and the crosslinking of the radiation-crosslinking PSA take place by means of actinic radiation after the coating of the carrier material with the PSA.

11. Process according to Claim 10, **characterized in that** the UV-curing material is precured by means of UV radiation before step (b).

12. Process according to one of Claims 10 and 11, **characterized in that** the radiation output of the actinic radiation is chosen such that it passes through the PSA and the carrier material impregnated with the UV-crosslinking material.

13. Process according to any one of Claims 8 to 12, **characterized in that** a UV-cured coating material, a UV-cured viscoelastic polymer or a UV-cured elastic polymer is used as UV-curing material.

## Revendications

1. Ruban adhésif qui comprend une pâte adhésive réticulée par irradiation et un matériau de support sur lequel la pâte adhésive réticulée est appliquée, le matériau de support étant sélectionné dans l'ensemble qui comprend les tissus, les tricots et les feutres et étant modifié par imprégnation par un matériau et ensuite durcissement du matériau,
**caractérisé en ce que**
le matériau est un matériau durcissant aux UV,
- à base d'un polymère de (méth)acrylates, acrylates d'uréthane, caoutchoucs de synthèse, résines de mélamine, caoutchoucs de synthèse modifiés ou acrylates d'époxy,
- leurs mélanges
- ou sous la forme d'un prépolymère.

2. Ruban adhésif selon la revendication 1, **caractérisé en ce que** la pâte adhésive réticulée par irradiation est une pâte adhésive réticulée au moyen d'un rayonnement actinique.

3. Ruban adhésif selon la revendication 1 ou la revendication 2, **caractérisé en ce que** la pâte adhésive réticulée est une pâte adhésive à l'acrylate dont la température de transition vitreuse est inférieure à 20°C.

4. Ruban adhésif selon la revendication 3, **caractérisé en ce que** la pâte adhésive à l'acrylate est basée sur une composition de copolymères qui contient des esters d'acide acrylique ou méthacrylique avec des groupes alkyle qui comptent de 4 à 14 atomes de carbone.

5. Ruban adhésif selon l'une des revendications précédentes, **caractérisé en ce que** le matériau durcissant aux UV est un vernis durcissant aux UV, un polymère viscoélastique durcissant aux UV ou un polymère élastique durcissant aux UV.

6. Ruban adhésif selon l'une des revendications 1 à 4, **caractérisé en ce que** le matériau durcissant aux UV est un vernis durcissant aux UV et dont la température de transition vitreuse après durcissement est supérieure à 10°C.

7. Ruban adhésif selon l'une des revendications précédentes, **caractérisé en ce que** le matériau de support est revêtu sur une ou deux faces par une pâte adhésive réticulée.

8. Procédé de fabrication d'un ruban adhésif, lequel procédé comprend les étapes qui consistent à :
(a) imprégnation d'un matériau de support par un matériau durcissant aux UV,
(b) revêtement du matériau de support imprégné du matériau durcissant aux UV par une pâte adhésive qui réticule sous l'action d'un rayonnement,
(c) durcissement du matériau durcissant aux UV, avant ou après le revêtement du matériau de support par la pâte adhésive qui réticule sous l'action d'un rayonnement et
(d) réticulation de la pâte adhésive.

9. Procédé selon la revendication 8, **caractérisé en ce que** la pâte adhésive qui réticule au moyen d'un rayonnement actinique est utilisée comme pâte adhésive.

10. Procédé selon la revendication 9, **caractérisé en ce que** le durcissement du matériau qui durcit aux UV et la réticulation de la pâte adhésive qui réticule par irradiation au moyen d'un rayonnement actinique s'effectue après l'application de la pâte adhésive sur le matériau de support.

11. Procédé selon la revendication 10, **caractérisé en ce que** le matériau durcissant aux UV est pré-durci au moyen d'un rayonnement UV avant l'étape (b).

12. Procédé selon l'une des revendications 10 et 11, **caractérisé en ce que** la puissance du rayonnement actinique est sélectionnée de telle sorte que le matériau de support imprégné d'un matériau réticulant aux UV et la pâte adhésive sont traversés par le rayonnement.

13. Procédé selon l'une des revendications 8 à 12, **caractérisé en ce que** comme matériau durcissant aux UV, on utilise un vernis durci aux UV, un polymère viscoélastique durci aux UV ou un polymère élastique durci aux UV.
